(19) Europäisches Patentamt / European Patent Office / Office européen des brevets

(11) **EP 2 056 380 B1**

(12) **EUROPEAN PATENT SPECIFICATION**

(45) Date of publication and mention of the grant of the patent:
**28.02.2018 Bulletin 2018/09**

(51) Int Cl.:
*H01M 4/58* (2010.01)     *H01M 4/02* (2006.01)

(21) Application number: **07805946.6**

(86) International application number:
**PCT/JP2007/066008**

(22) Date of filing: **17.08.2007**

(87) International publication number:
**WO 2008/020620 (21.02.2008 Gazette 2008/08)**

(54) **NEGATIVE ELECTRODE ACTIVE MATERIAL FOR LITHIUM ION SECONDARY BATTERY, PROCESS FOR PRODUCING THE SAME, AND NEGATIVE ELECTRODE FOR LITHIUM ION SECONDARY BATTERY AND LITHIUM ION SECONDARY BATTERY BOTH EMPLOYING THE SAME.**

AKTIVES MATERIAL FÜR EINE NEGATIVE ELEKTRODE FÜR EINE LITHIUMIONEN-SEKUNDÄRBATTERIE, HERSTELLUNGSVERFAHREN DAFÜR, SOWIE DIESES VERWENDENDE NEGATIVE ELEKTRODE FÜR EINE LITHIUMIONEN-SEKUNDÄRBATTERIE UND LITHIUMIONEN-SEKUNDÄRBATTERIE

MATÉRIAU ACTIF D'ÉLECTRODE NÉGATIVE POUR BATTERIE SECONDAIRE ION-LITHIUM, PROCÉDÉ DE PRODUCTION DE CELUI-CI, ÉLECTRODE NÉGATIVE POUR BATTERIE SECONDAIRE ION-LITHIUM UTILISANT CELUI-CI, ET BATTERIE SECONDAIRE ION-LITHIUM

(84) Designated Contracting States:
**DE**

(30) Priority: **17.08.2006 JP 2006222801**

(43) Date of publication of application:
**06.05.2009 Bulletin 2009/19**

(73) Proprietor: **Mitsubishi Chemical Corporation Tokyo 100-8251 (JP)**

(72) Inventors:
• **YOKOMIZO, Masakazu**
  **Ibaraki 3000332 (JP)**

• **SATO, Hideharu**
  **Ibaraki 3000332 (JP)**
• **KAMADA, Tomiyuki**
  **Tokyo 1080014 (JP)**

(74) Representative: **Vossius & Partner Patentanwälte Rechtsanwälte mbB Siebertstrasse 3 81675 München (DE)**

(56) References cited:
WO-A1-2006/008930     JP-A- 01 152 165
JP-A- 09 161 848        JP-A- 2002 514 245
US-A- 6 096 101         US-A1- 2008 032 192

**Description**

TECHNICAL FIELD

The present invention relates to a negative-electrode active material for a lithium ion secondary battery, a process for producing the negative-electrode active material, and a negative electrode for lithium ion secondary batteries and a lithium ion secondary battery both employing the negative-electrode active material.

BACKGROUND ART

Recently, with the trend toward size reduction in electronic appliances, secondary batteries have come to be desired to have a higher capacity. Attention is hence focused on lithium ion secondary batteries, which have a higher energy density than nickel-cadmium batteries and nickel-hydrogen batteries. It was first attempted to use metallic lithium as a negative-electrode active material for a lithium ion secondary battery. However, it was found that dendritic lithium deposits with repetitions of charge/discharge and that there is a possibility that the dendritic lithium might penetrate the separation and reach the positive electrode to cause short-circuiting. Because of this, a technique in which a carbon material which, during charge/discharge, is capable of occluding lithium ions in spaces between layers thereof and releasing the ions therefrom and which can thus prevent lithium metal deposition is used as a negative-electrode active material is presently attracting attention.

Use of a graphite as the carbon material is described, for example, in patent document 1. In particular, it is known that when a graphite having a high degree of graphitization is used as a negative-electrode active material for a lithium ion secondary battery, a capacity close to 372 mAh/g, which is the theoretical capacity of graphite concerning lithium ion storage, is obtained and that graphite is a preferred active material.

On the other hand, as solvents for electrolytes for lithium ion secondary batteries, use is made of high-permittivity solvents such as cyclic carbonates represented by ethylene carbonate, propylene carbonate, butylene carbonate, and the like and low-viscosity solvents such as chain carbonates, e.g., dimethyl carbonate, ethyl methyl carbonate, and diethyl carbonate, cyclic esters such as γ-butyrolactone, cyclic ethers such as tetrahydrofuran and 1,3-dioxolane, and chain ethers such as 1,2-dimethoxyethane. Such solvents are used alone or as a mixture. A mixture of a high-permittivity solvent and a low-viscosity solvent is especially frequently used. Examples of lithium salts include $LiPF_6$, $LiBF_4$, $LiClO_4$, and $LiN(SO_2CF_3)_2$. Such lithium salts are used alone or in combination of two or more thereof.

However, when such an electrolyte is used in a lithium ion secondary battery in combination with a negative electrode employing a carbon material as a negative-electrode active material, then the electrolyte reacts, during charge, with the carbon material used as a negative-electrode active material to form a lithium-containing passive-state film on the surface of the carbon material. As a result, there have been problems such as, e.g., an increase in irreversible capacity, decomposition of the electrolyte due to reaction between the carbon material and the electrolyte during charge or discharge, and deterioration of capacity retention due to reaction between the negative-electrode active material and the electrolyte during repetitions of charge/discharge. Factors which are thought to contribute to these problems are the large BET specific surface area of the carbon material and the large amount of surface functional groups of the material.

Under such circumstances, patent document 1 describes a method of forming a coating film containing a carbon material and a thermoplastic crosslinked elastomer on a metal-foil current collector. In the negative electrode produced by the method according to patent document 1, the coating film made of an active material/binder mixture does not peel off the electrode metal base even when the negative electrode is wound in negative-electrode production. The coating film itself also has sufficient strength. However, the method described in patent document 1 has the following drawback. In this method, a thermoplastic elastomer is mixed with a coating slurry and is subjected to a crosslinking treatment after electrode production. In this method, however, the whole electrode is crosslinked disadvantageously. Consequently, there is an unsolved problem that adhesion of the crosslinked polymer to the copper foil or the like hence occurs and this reduces the current-collecting performance of the current collector.

Patent document 2 discloses use of an electrode mix characterized by including a binder and a polyvalent organic acid together with an electrode active material. The document describes a method by which an electrode mix having improved flowability is thus obtained and this electrode mix can be prevented from increasing in viscosity with the lapse of time. However, also in the method according to patent document 2, the organic acid is distributed not only in the active material but also throughout the whole electrode and, hence, the organic acid disadvantageously adheres to the current collector. Consequently, as in the method according to patent document 1, there is the unsolved problem that current-collecting performance decreases.

Patent Document 1: JP-A-2000-100441

Patent Document 2: JP-A-2005-011594

JP 2002-514245 A describes salts of heterocyclic anions and their uses as ionic conductive materials.

JP 09-161848 A describes that a specific carbon electrode material for a lithium secondary battery is dipped into a solution containing a compound functioning as the matrix of one kind of more macromolecule solid electrolyte, to adsorb the compound onto the surface of the carbon electrode material. Next, a crosslinking compound, such as a silane coupling agent, is added to the solution to crosslink the matrix to coat the surface of the carbon electrode material by a coat insoluble in an aprotic organic solvent and having a lithium ion conductivity of 0.5-10 wt.%.

JP 01-152165 A describes a surface-treated carbon black which is obtained by mixing carbon black with a polyamine and/or its modified product under agitation at a temperature condition of 0-300°C.

WO 2006/008930 (A1) discloses a negative-electrode material for a lithium secondary battery, comprising particles (A) selected from the group consisting of carbon-material particles, metal particles, and metal-oxide particles; and two or more different polymeric materials each attached to different sites of the particles.

DISCLOSURE OF THE INVENTION

PROBLEMS THAT THE INVENTION IS TO SOLVE

The invention has been achieved in view of those background techniques. An object of the invention is to provide a negative-electrode active material for a lithium ion secondary battery which facilitates electrode production and attains a low irreversible capacity.

MEANS FOR SOLVING THE PROBLEMS

The present inventors diligently made investigations in view of the problems described above. As a result, it has been found that an important factor in irreversible capacity is surface functional groups of the negative-electrode active material. Furthermore, it has been found that to crosslink these surface functional groups with a crosslinking agent during the production of a negative-electrode active material is effective not only in preventing an unnecessary ingredient, e.g., the crosslinking agent, from adhering during electrode production to thereby facilitate electrode formation but also in preventing the negative-electrode active material from unnecessarily reacting with the electrolyte after battery fabrication to thereby attain a reduction in irreversible capacity. The invention has been thus completed.

Essential points of the invention are as follows.

1. A negative-electrode active material for a lithium ion secondary battery, which is capable of storing/releasing lithium ions, and is obtained by reacting a surface functional group of a raw material for negative electrode with at least one crosslinking agent selected from the group consisting of multidentate alcohols, multidentate ethers, multidentate carboxylic acids, multidentate esters, and compounds having a structure composed of a combination thereof.

2. The negative-electrode active material for a lithium ion secondary battery according to item 1, wherein the raw material for negative electrode is a carbonaceous substance.

3. The negative-electrode active material for a lithium ion secondary battery according to items 1 or 2, wherein the surface functional group of the raw material for negative electrode is at least one kind of functional groups selected from the group consisting of a hydroxyl group, a carboxyl group, an ether group, a carbonyl group, and an ester group.

4. The negative-electrode active material for a lithium ion secondary battery according to item 1, wherein the crosslinking agent is a compound having a diester structure.

5. The negative-electrode active material for a lithium ion secondary battery according to item 1, wherein the crosslinking agent is a sebacic acid diester or [a polyhydric alcohol/carbonyl adduct].

6. The negative-electrode active material for a lithium ion secondary battery according to any one of items 1 to 5, which has a BET specific surface area decreasing to 10% or more of a BET specific surface area of the uncrosslinked raw material for negative electrode.

7. The negative-electrode active material for a lithium ion secondary battery according to any one of items 1 to 6, which has a roundness of 0.85 or higher.

8. The negative-electrode active material for a lithium ion secondary battery according to any one of items 1 to 7, which has a tap density of 0.1 g/cm$^3$ or higher.

9. A process for producing a negative-electrode active material which comprises attaching a crosslinking agent to a raw material for negative electrode and then reacting the crosslinking agent with a surface functional group of the raw material for negative electrode, wherein the crosslinking agent is selected from the group consisting of multidentate alcohols, multidentate ethers, multidentate carboxylic acids, multidentate esters, and compounds having a structure composed of a combination thereof.

10. A negative electrode for a lithium ion secondary battery,
which comprises: a current collector; and an active-material layer formed thereon comprising a negative-electrode active material and a binder, wherein the negative-electrode active material is the negative-electrode active material for a lithium ion secondary battery according to any one of items 1 to 8.

11. A lithium ion secondary battery comprising: a positive electrode and a negative electrode which are capable of storing/releasing lithium ions; and an electrolyte, wherein the negative electrode is the negative electrode for a lithium ion secondary battery according to item 10.

ADVANTAGES OF THE INVENTION

According to the negative-electrode active material for a lithium ion secondary battery of the invention, electrode formation is easy and a lithium ion secondary battery having a low irreversible capacity and excellent in various battery characteristics is realized.

BEST MODE FOR CARRYING OUT THE INVENTION

Embodiments of the invention will be explained below in detail. However, the following explanations on constituent elements are for embodiments (typical embodiments) of the invention and should not be construed as limiting the invention.

<Negative-Electrode Active Material>

The negative-electrode active material for a lithium ion secondary battery of the invention is a negative-electrode active material obtained by crosslinking a surface functional group of a raw material for negative electrode. Hereinafter, this active material is sometimes abbreviated to "surface-crosslinked active material".

1. Raw Material for Negative Electrode

In the invention, the raw material for negative electrode is not particularly limited so long as it is a material capable of storing/releasing lithium. For example, a carbon material constituted of a carbonaceous substance is preferred. Examples of the carbonaceous substance include carbon materials having various degrees of graphitization, ranging from graphitic to amorphous substances. Especially preferred raw materials for negative electrode are particles of either a graphite or a carbon material having a low degree of graphitization, because such materials are easily available commercially. It has been ascertained that use of graphite particles as a negative-electrode active material is far more effective in improving charge/discharge characteristics at a high current density than in the case of using other negative-electrode active materials.

As the graphite may be used either of natural graphite and an artificial graphite. The graphite preferably is one having a low impurity content. Specifically, one having an impurity content lower than 1% is preferred, and one having an impurity content lower than 0.5% is especially preferred. A graphite is subjected to various purification treatments according to need in order to remove impurities before being used. One having a high degree of graphitization is preferred. Specifically, one which has an interplanar spacing for the (002) planes (d002) as determined by wide-angle X-ray diffractometry smaller than 3.37 Å (0.337 nm) is preferred.

Examples of the artificial graphite include ones obtained by carbonizing and graphitizing organic substances, such as coal tar pitch, coal-derived heavy oils, topping residues, petroleum-derived heavy oils, aromatic hydrocarbons, nitrogen-containing cyclic compounds, sulfur-containing cyclic compounds, polyphenylenes, poly(vinyl chloride), poly(vinyl alcohol), polyacrylonitrile, poly(vinyl butyral), natural polymers, poly(phenylene sulfide), poly(phenylene oxide), furfuryl alcohol resins, phenol-formaldehyde resins, and imide resins, at a temperature in the range of from generally 2,500°C to generally 3,200°C.

As a carbon material having a low degree of graphitization, use may be made of one obtained by carbonizing an organic substance at a temperature of generally 2,500°C or lower. Examples of the organic substance include coal tar pitch and coal-derived heavy oils such as dry distillation/liquefaction oil; straight-run heavy oils such as topping residues and vacuum distillation residues; petroleum-derived heavy oils such as heavy oils resulting from cracking, such as ethylene tar as a by-product of the thermal cracking of crude oil, naphtha, etc.; aromatic hydrocarbons such as acenaphthylene, decacyclene, and anthracene; nitrogen-containing cyclic compounds such as phenazine and acridine; sulfur-containing cyclic compounds such as thiophene; alicyclic compounds such as adamantane; polyphenylenes such as biphenyl and terphenyl; and thermoplastic polymers such as poly(vinyl chloride), poly(vinyl acetate), poly(vinyl butyral), and poly(vinyl alcohol).

In the case of obtaining a carbon material having a low degree of graphitization, the temperature at which an organic substance is carbonized is generally 600°C or higher, preferably 800°C or higher, more preferably 900°C or higher, especially preferably 950°C or higher. The upper limit thereof is generally 2,500°C or lower, preferably 2,000°C or lower, more preferably 1,700°C or lower, especially 1,400°C or lower, although it varies depending on the target degree of graphitization to be imparted to the carbon material, etc. An acid such as phosphoric acid, boric acid, or hydrochloric acid or an alkali such as sodium hydroxide may be mixed with the organic substance to be burned.

As the raw material for negative electrode, one of those particulate carbonaceous substances (particles of a graphite or of a carbon material having a low degree of graphitization) may be used alone. Alternatively, any desired two or more of those particulate carbonaceous substances may be suitably mixed and used. Furthermore, use may be made of one in which two or more materials coexist in the individual particles. For example, use may be made of: carbonaceous particles each having a structure obtained by coating the surface of a graphite with a carbon material having a low degree of graphitization; or particles obtained by aggregating graphite particles with an appropriate organic substance and subjecting the aggregates to re-graphitization. Such composite particles may contain a metal capable of forming an alloy with lithium, such as, e.g., tin, silicon, aluminum, or bismuth. In the following explanations, carbonaceous substances are used as an example.

(Properties of Raw Material for Negative Electrode)

With respect to the properties of the raw material for negative electrode, it is desirable that any one of the following (1) to (11) should be satisfied or two or more thereof be simultaneously satisfied.

(1) X-Ray Parameter

The raw material for negative electrode preferably has a value of d (interplanar spacing) for the lattice planes (002), as determined by X-ray diffractometry in accordance with the method of the Japan Society for Promotion of Scientific Research, of 0.335 nm or larger. The upper limit of the value of d is generally 0.360 nm or smaller, preferably 0.350 nm or smaller, more preferably 0.345 nm or smaller, even more preferably 0.337 nm or smaller. In case where the value of d of the raw material is too large, this raw material has reduced crystallinity and there are cases where initial irreversible capacity increases. On the other hand, the value 0.335 nm is a theoretical value for graphite. The crystallite size (Lc) of the carbon material, as determined by X-ray diffractometry in accordance with the method of the Japan Society for Promotion of Scientific Research, is generally 30 nm or larger, preferably 50 nm or larger, more preferably 100 nm or larger. In case where the value of Lc of the material is smaller than the lower limit of that range, this material has reduced crystallinity and there are cases where initial irreversible capacity increases.

(2) Ash Content

It is preferred that the ash content of the raw material for negative electrode should be generally 1% by mass or lower, especially 0.5% by mass or lower, in particular 0.1% by mass or lower, based on the whole raw material for negative electrode. When the ash content thereof exceeds the upper limit of that range, there are cases where battery performance deterioration caused by reaction with the electrolyte during charge/discharge becomes not negligible.

(3) Volume-Average Particle Diameter

With respect to the volume-average particle diameter of the raw material for negative electrode, the volume-average particle diameter (median diameter) thereof as determined by the laser diffraction/scattering method is generally 1 $\mu$m or larger, preferably 3 $\mu$m or larger, more preferably 5 $\mu$m or larger, even more preferably 7 $\mu$m or larger. The upper limit thereof is generally 100 $\mu$m or smaller, preferably 50 $\mu$m or smaller, more preferably 40 $\mu$m or smaller, even more preferably 30 $\mu$m or smaller. When the volume-average particle diameter thereof is smaller than the lower limit of that range, there are cases where irreversible capacity increases, leading to a loss in initial battery capacity. When the volume-average particle diameter thereof exceeds the upper limit of that range, there are cases where such a raw material is undesirable from the standpoint of battery production because an uneven coating surface is apt to result when an electrode is formed.

Volume-average particle diameter in the invention is defined as the median diameter determined by dispersing the carbon powder in a 0.2% by mass aqueous solution (about 1 mL) of poly (oxyethylene (20)) sorbitan monolaurate as a surfactant and examining the dispersion with a laser diffraction type particle size distribution analyzer (e.g., LA-700, manufactured by HORIBA, Ltd.).

(4) Raman R Value, Raman Half-Value Width

The Raman R value of the raw material for negative electrode as determined by the argon ion laser Raman spectroscopy may be in the following range. It is generally 0.01 or higher, preferably 0.03 or higher, more preferably 0.07 or higher, especially preferably 0.1 or higher. The upper limit thereof is generally 0.6 or lower, preferably 0.5 or lower, especially preferably 0.4 or lower. When the Raman R value thereof is lower than the lower limit of that range, the surface of such particles has too high crystallinity and there are cases where the number of interlaminar sites into which lithium comes with charge/discharge decreases. Namely, there are cases where suitability for charge decreases. On the other hand, when the Raman R value thereof exceeds the upper limit of that range, the surface of such particles has reduced crystallinity and there are cases where the resultant negative-electrode active material has enhanced reactivity with an electrolyte, leading to a decrease in efficiency and enhanced gas evolution.

The Raman half-value width around 1,580 $cm^{-1}$ of the raw material for negative electrode is not particularly limited. However, the half-value width thereof may be in the following range. It is generally 10 $cm^{-1}$ or larger, preferably 12 $cm^{-1}$ or larger, more preferably 15 $cm^{-1}$ or larger. The upper limit thereof is generally 60 $cm^{-1}$ or smaller, preferably 45 $cm^{-1}$ or smaller, more preferably 40 $cm^{-1}$ or smaller. When the Raman half-value width thereof is smaller than the lower limit of that range, the surface of such particles has too high crystallinity and there are cases where the number of interlaminar sites into which lithium comes with charge/discharge decreases. Namely, there are cases where suitability for charge decreases. On the other hand, when the Raman half-value width thereof exceeds the upper limit of that range, the surface of such particles has reduced crystallinity and there are cases where the resultant negative-electrode active material has enhanced reactivity with an electrolyte, leading to a decrease in efficiency and enhanced gas evolution.

An examination for a Raman spectrum is made with a Raman spectrometer (e.g., a Raman spectrometer manufactured by Japan Spectroscopic Co., Ltd.). In the examination, a sample is charged into a measuring cell by causing the sample to fall naturally into the cell, and the surface of the sample in the cell is irradiated with argon ion laser light while rotating the cell in a plane perpendicular to the laser light. The Raman spectrum obtained is examined for the intensity $I_A$ of a peak $P_A$ around 1,580 $cm^{-1}$ and the intensity $I_B$ of a peak $P_B$ around 1,360 $cm^{-1}$. The ratio between these intensities R ($R=I_B/I_A$) is calculated, and this ratio is defined as the Raman R value of the raw material for negative electrode. Furthermore, the half-value width of the peak $P_A$ around 1,580 $cm^{-1}$ in the Raman spectrum obtained is measured, and this value is defined as the Raman half-value width of the carbon material.

Conditions for this examination by Raman spectroscopy are as follows.

- Wavelength of argon ion laser: 514.5 nm
- Laser power on sample: 15-25 mW
- Resolution: 10-20 $cm^{-1}$
- Examination range: 1,100-1,730 $cm^{-1}$
- Analysis for Raman R value and Raman half-value width: background processing
- Smoothing: simple average; convolution, 5 points

(5) BET Specific Surface Area

The BET specific surface area, i.e., the specific surface area determined by the BET method, of the raw material for negative electrode is generally 0.1 $m^2/g$ or larger, preferably 0.7 $m^2/g$ or larger, more preferably 1 $m^2/g$ or larger, even more preferably 1.5 $m^2/g$ or larger. The upper limit thereof is generally 100 $m^2/g$ or smaller, preferably 50 $m^2/g$ or smaller, more preferably 25 $m^2/g$ or smaller, even more preferably 15 $m^2/g$ or smaller, especially preferably 10 $m^2/g$ or smaller. When the BET specific surface area thereof is smaller than the lower limit of that range, there are cases where this raw material gives a negative-electrode active material (surface-crosslinked active material) which, when used, is apt to have poor lithium ion acceptance during charge. On the other hand, when the specific surface area thereof exceeds the upper limit of that range, there are cases where this raw material gives a negative-electrode active material (surface-crosslinked active material) which, when used, is apt to have enhanced reactivity with an electrolyte to enhance gas evolution, making it difficult to obtain a preferred battery.

BET specific surface area is defined as a value measured with a surface area meter (e.g., a fully automatic surface area measuring apparatus manufactured by Ohkura Riken Co., Ltd.) by preliminarily drying a sample at 350°C for 15 minutes in a nitrogen stream and then measuring the specific surface area thereof by the gas-flowing nitrogen adsorption BET one-point method using a nitrogen/helium mixture gas precisely regulated so as to have a nitrogen pressure of 0.3 relative to atmospheric pressure.

(6) Pore Distribution

The pore distribution of the raw material for negative electrode as determined by mercury porosiometry (mercury penetration method) may be in the following range. The amount of intraparticle interstices corresponding to a diameter of from 0.01 $\mu$m to 1 $\mu$m and particle surface irregularities formed by steps is 0.01 mL/g or larger, preferably 0.05 mL/g or larger, more preferably 0.1 mL/g or larger. The upper limit thereof is 0.6 mL/g or smaller, preferably 0.4 mL/g or smaller, more preferably 0.3 mL/g or smaller. When the amount thereof exceeds the upper limit of that range, there are cases where a large amount of a binder is necessary in electrode formation. On the other hand, when the amount thereof is smaller than the lower limit of that range, there are cases where high-current-density charge/discharge characteristics decrease and the effect of diminishing electrode expansion/shrinkage during charge/discharge is difficult to obtain.

The total pore volume of the raw material may be in the following range. It is preferably 0.1 mL/g or larger, more preferably 0.25 mL/g or larger. The upper limit thereof is generally 10 mL/g or smaller, preferably 5 mL/g or smaller, more preferably 2 mL/g or smaller. When the total pore volume thereof exceeds the upper limit of that range, there are cases where a large amount of a binder is necessary in electrode formation. When the total pore volume thereof is smaller than the lower limit, there are cases where the dispersing effect of a thickener or binder in electrode formation is not obtained.

The average pore diameter of the raw material may be in the following range. It is generally 0.05 $\mu$m or larger, preferably 0.1 $\mu$m or larger, more preferably 0.5 $\mu$m or larger. The upper limit thereof is generally 50 $\mu$m or smaller, preferably 20 $\mu$m or smaller, more preferably 10 $\mu$m or smaller. When the average pore diameter thereof exceeds the upper limit of that range, there are cases where a large amount of a binder is necessary. On the other hand, when the average pore diameter thereof is smaller than the lower limit of that range, there are cases where high-current-density charge/discharge characteristics decrease.

As an apparatus for the mercury porosimetry is used a mercury porosimeter (Autopore 9520, manufactured by Micromeritics Corp.). About 0.2 g of a sample (raw material for negative electrode) is weighed out and placed in a powder cell, and this cell is closed. The sample in the cell is pretreated by degassing it at room temperature under vacuum (50 $\mu$mHg or lower) for 10 minutes. Subsequently, the pressure in the cell is reduced to 4 psia (about 28 kPa) and mercury is introduced thereinto. The internal pressure is stepwise elevated from 4 psia (about 28 kPa) to 40,000 psia (about 280 MPa) and then lowered to 25 psia (about 170 kPa). The number of steps in the pressure elevation is 80 or larger. In each step, the amount of mercury penetrated is measured after an equilibrium time of 10 seconds. A pore distribution is calculated from the mercury penetration curve thus obtained, using the Washburn equation. Incidentally, the surface tension ($\gamma$) and contact angle ($\psi$) of mercury are taken as 485 dyne/cm and 140°, respectively. The average pore diameter used is the pore diameter corresponding to a cumulative pore volume of 50%.

(7) Roundness

With respect to the degree of sphericity of the raw material for negative electrode, the roundness of the particles having a particle diameter in the range of 10-40 $\mu$m is preferably 0.1 or higher, especially preferably 0.5 or higher, more preferably 0.8 or higher, even more preferably 0.85 or higher, most preferably 0.9 or higher. High roundness values are preferred because they are effective in improving high-current-density charge/discharge characteristics. Roundness is defined by the following equation. When a particle has a roundness of 1, this particle theoretically is a true sphere.

$$\text{Roundness} = \text{(length of periphery of equivalent circle having the same area as projected shape of raw material for negative electrode)/(actual length of periphery of projected shape of raw material for negative electrode)}$$

The value of roundness is determined, for example, with a flow type particle image analyzer (e.g., FPIA, manufactured by Sysmex Industrial Corp.) by dispersing about 0.2 g of a sample in a 0.2% by mass aqueous solution (about 50 mL) of poly(oxyethylene(20)) sorbitan monolaurate as a surfactant, propagating an ultrasonic wave of 28 kHz to the dispersion for 1 minute at an output of 60 W, and then examining particles having a particle diameter in the range of 3-40 $\mu$m with the analyzer having a detection range set at 0.6-400 $\mu$m.

Methods for improving roundness are not particularly limited. However, a raw material for negative electrode in which the particles have been rounded by a rounding treatment is preferred because it gives an electrode in which the interstices among particles are uniform in shape. Examples of the rounding treatment include: a method in which a shear force or compressive force is applied to thereby mechanically make the shape of the particles close to sphere; and a method of mechanical/physical treatment in which fine particles are aggregated into particles with a binder or by means of the bonding force of the fine particles themselves.

(8) True Density

The true density of the raw material for negative electrode is generally 2 g/cm$^3$ or higher, preferably 2.1 g/cm$^3$ or higher, more preferably 2.2 g/cm$^3$ or higher, even more preferably 2.22 g/cm$^3$ or higher. The upper limit thereof is generally 2.26 g/cm$^3$ or lower. This upper limit is a theoretical value for graphite. When the true density of the raw material for negative electrode is lower than the lower limit of that range, there are cases where this carbon has too low crystallinity, resulting in an increase in initial irreversible capacity. In the invention, true density is defined as one determined by the liquid-phase displacement method (pycnometer method) using butanol.

(9) Tap Density

It is desirable that the tap density of the raw material for negative electrode should be generally 0.1 g/cm$^3$ or higher, preferably 0.5 g/cm$^3$ or higher, more preferably 0.7 g/cm$^3$ or higher, especially preferably 0.9 g/cm$^3$ or higher. The upper limit thereof is preferably 2 g/cm$^3$ or lower, more preferably 1.8 g/cm$^3$ or lower, especially preferably 1.6 g/cm$^3$ or lower. When the tap density of the raw material for negative electrode is lower than the lower limit of that range, there are cases where this raw material gives a negative-electrode active material which, when used in a negative electrode, is less apt to have a high loading density and cannot give a battery having a high capacity. On the other hand, when the tap density thereof exceeds the upper limit of that range, the amount of interparticle interstices in the electrode is too small and it is difficult to secure electrical conductivity among particles of the negative-electrode active material (surface-crosslinked active material). There are hence cases where preferred battery characteristics are difficult to obtain.
In the invention, the tap density of a sample is determined in the following manner. The sample is dropped through a sieve having an opening size of 300 $\mu$m into a 20 cm$^3$ tapping cell to fill the cell with the sample up to the brim. Subsequently, tapping operations in which the stroke length is 10 mm are conducted 1000 times using a powder densimeter (e.g., Tap Denser, manufactured by Seishin Enterprise Co., Ltd.). The bulk density thus measure is defined as the tap density.

(10) Orientation Ratio (Powder)

The orientation ratio of the raw material for negative electrode may be in the following range. It is generally 0.005 or higher, preferably 0.01 or higher, more preferably 0.015 or higher. The upper limit thereof is theoretically 0.67 or lower. When the orientation ratio thereof is lower than the lower limit of that range, there are cases where high-density charge/discharge characteristics decrease.
Orientation ratio is determined by X-ray diffractometry. The peaks attributable to the (110) diffraction and (004) diffraction of the carbon obtained by X-ray diffractometry are subjected to peak separation by fitting with asymmetric Pearson VII as a profile function. Thus, integrated intensities of the (110) diffraction and (004) diffraction peaks are calculated. From the integrated intensities obtained, the ratio represented by (integrated intensity of (110) diffraction)/(integrated intensity of (004) diffraction) is calculated. This ratio is defined as the orientation ratio.
Conditions for this X-ray diffractometry are as follows. Incidentally, "2$\theta$" represents diffraction angle.
• Target: Cu(K$\alpha$ line) graphite monochrometer
• Slit:

  Divergence slit = 1 degree
  Receiving slit = 0.1 mm
  Scattering slit = 1 degree

• Examination range and step angle/measuring time:

|  |  |
|---|---|
| (110) plane: 76.5°≤2$\theta$≤78.5° | 0.01°/3 sec |
| (004) plane: 53.5°≤2$\theta$≤56.0° | 0.01°/3 sec |

(11) Aspect Ratio (Powder)

The aspect ratio of the raw material for negative electrode is theoretically 1 or higher. The upper limit thereof is generally 10 or lower, preferably 8 or lower, more preferably 5 or lower. When the aspect ratio thereof exceeds the upper limit of that range, there are cases where streak lines generate in electrode formation and an even coating surface cannot be obtained, leading to a decrease in high-current-density charge/discharge characteristics. The aspect ratio of a carbon material particle is represented by A/B, wherein A is the length of the longest axis of the particle in a three-dimensional examination and B is the length of the shortest axis perpendicular to that axis. The examination of carbonaceous particles is made with a scanning electron microscope capable of enlargement examination. Fifty are arbitrarily selected from particles of the raw material for negative electrode which are fixed to an edge face of a metal having a thickness of 50 $\mu$m or smaller, and each particle is examined for A and B while rotating or inclining the stage to which the sample is fixed. The average of A/B values is determined.

2. Crosslinking Agent

The crosslinking agent to be used for the invention is a compound capable of crosslinking a surface functional group of a raw material for negative electrode. The crosslinking agent is selected from the group consisting of multidentate alcohols, multidentate ethers, multidentate carboxylic acids, multidentate esters, and compounds having a structure composed of a combination thereof from the standpoint of satisfactory reactivity in the crosslinking of surface functional groups of the raw material for negative electrode. Multidentate alcohols, multidentate ethers, multidentate carboxylic acids, and multidentate esters are more preferred because these compounds are highly effective in reducing irreversible capacity. Especially preferred are multidentate esters.

Preferred of those multidentate compounds from the standpoint of easy availability are bi- to sexidentate compounds. Especially preferred are bidentate compounds. With respect to the molecular weight of the crosslinking agent, the lower limit thereof is generally 50 or higher, preferably 80 or higher, especially preferably 100 or higher, from the standpoint of the structural stability of the crosslinking agent. The upper limit thereof generally is lower than 2,000. From the standpoint of viscosity, the upper limit thereof is preferably lower than 1,000, especially preferably lower than 500.

Examples of such crosslinking agents are as follows. Examples of the multidentate alcohols include compounds having a diol structure, such as ethylene glycol, 1,2-propanediol, 1,3-propanediol, 1,3-butanediol, 1,4-butanediol, neopentyl glycol, 1,5-pentanediol, and 1,6-hexanediol, and compounds having a triol structure, such as glycerol and derivatives thereof.

Examples of the multidentate ethers include compounds having a quaterdentate, quinquedentate, or sexidentate structure, such as crown ethers, and compounds having a triether structure such as triethoxysilane. Examples of the multidentate carboxylic acids include oxalic acid, malonic acid, succinic acid, glutaric acid, adipic acid, pimelic acid, suberic acid, azelaic acid, sebacic acid, citric acid, and derivatives of such acids. Preferred of these from the standpoint of reducing irreversible capacity is sebacic acid, maleic acid, or succinic acid.

Examples of the multidentate esters include compounds having a diester structure, such as oxalic esters, malonic esters, succinic esters, glutaric esters, adipic esters, pimelic esters, suberic esters, azelaic esters, and sebacic esters, and compounds having a triester structure, such as triacylglycerols. Preferred of such multidentate esters are compounds having a diester structure. More preferred examples are sebacic diesters. An especially preferred example is diethyl sebacate from the standpoint of reducing irreversible capacity. Preferred examples of the crosslinking agent further include polyhydric alcohol/carbonyl adducts such as those represented by trade name SEQUAREZ 755 (manufactured by Sansho Co. , Ltd.), i.e., polymers of the type having a glyoxal polyol reaction product consisting of one anhydroglucose unit and two glyoxal units, which was used in an Example given later.

(Addition Amount)

The crosslinking agent is added to and reacted with a raw material for negative electrode. The lower limit of the amount of the crosslinking agent to be added is generally 0.1% by mass or larger, preferably 0.5% by mass or larger, more preferably 1% by mass or larger. The upper limit thereof is generally 20% by mass or smaller, preferably 15% by mass or smaller. In case where the amount of the crosslinking agent is smaller than the lower limit of that range, the proportion of functional groups which can be crosslinked is reduced and there are cases where the effect of reducing irreversible capacity is lessened. On the other hand, in case where the amount thereof exceeds the upper limit of that range, the proportion of the crosslinking agent in the active material increases and this may result in a decrease in capacity per unit amount of the active material.

(Surface Functional Groups)

The surface functional groups of a raw material for negative electrode which are to be crosslinked with a crosslinking agent are not particularly limited so long as they are functional groups causative of an increase in irreversible capacity. Examples thereof include a hydroxyl group, carboxyl group, ether group, carbonyl group, and ester group. Such functional groups are crosslinked with the crosslinking agent described above to thereby reduce the amount of surface functional groups of the raw material for negative electrode. Thus, irreversible capacity can be reduced.

(Other Compounds including Crosslinking Reaction Initiator)

The raw material for negative electrode to be used for the invention can be mixed with other compounds, e.g., a crosslinking reaction initiator, according to need together with the crosslinking agent described above. Examples of the crosslinking reaction initiator include: polymerization initiators such as peroxides, e.g., benzoyl peroxide, and azo compounds, e.g., azobisisobutyronitrile (AIBN); acids such as sulfuric acid and hydrochloric acid; and alkalis such as lithium hydroxide, sodium hydroxide, and potassium hydroxide.

In the case where the crosslinking agent has a multidentate ester structure, a preferred crosslinking reaction initiator is an acid such as sulfuric acid or hydrochloric acid or an alkali such as lithium hydroxide, sodium hydroxide, or potassium hydroxide. With respect to the amount of these crosslinking reaction initiators to be added (the number of reaction sites), the lower limit thereof is preferably at least 0.001 time, especially at least 0.01 time the number of the surface functional groups to be crosslinked. The upper limit thereof is generally up to 1 time the number of the surface functional groups. In the invention, reactions between surface functional groups of the negative-electrode active material and any of the compounds enumerated above as examples of the crosslinking agent are not limited so long as the compound has reacted so as to produce the same effects as the invention. Consequently, even when reactions other than crosslinking reaction have occurred or when part of the surface functional groups of the negative-electrode active material remain unreacted, this negative-electrode active material is within the scope of the invention so long as the same effects as those of the invention are produced.

3. Production Processes

Processes for producing the negative-electrode active material (surface-crosslinked active material) for lithium ion secondary batteries of the invention are not particularly limited so long as surface functional groups of a raw material for negative electrode can be crosslinked. However, in the case where two or more ingredients including a crosslinked agent and a compound such as a crosslinking reaction initiator are used, it is preferred to employ the following process in order that a negative-electrode active material having the structure described above (surface-crosslinked active material) might be efficiently produced through a small number of steps without fail. Namely, it is preferred to use a process including at least the following two steps: a step in which the crosslinking agent is first attached to the raw material for negative electrode (attachment step); and a step in which the crosslinking agent is then reacted with surface functional groups of the raw material for negative electrode with heating, etc. (reaction step) optionally after a step in which the raw material having the crosslinking agent attached thereto is mixed with a compound such as a crosslinking reaction initiator. The attachment step and the reaction step need not be clearly separate steps, and may be steps which are conducted successively.

Typical examples include the following three methods, in each of which specific techniques for attachment are not particularly limited.

(i) A method in which a raw material for negative electrode and a crosslinking agent are merely mixed with each other in a particulate state and then reacted.

(ii) A method in which a raw material for negative electrode and a crosslinking agent are mixed together while applying mechanical impact thereto to attach (or fusion-bond) the crosslinking agent to the raw material and then reacted.

(iii) A method in which a crosslinking agent which has been swelled, dispersed, or dissolved in a solvent is attached to a raw material for negative electrode and then reacted.

Any one of these methods (i) to (iii) may be conducted alone, or a suitable combination of two or more thereof may be conducted. A step in which a crosslinking reaction initiator necessary for the reaction is mixed and the reaction step can be conducted in any desired stage.

In the method (i) or (ii), specific techniques of mixing are not particularly limited. For example, either of dry mixing and wet mixing may be used. Mixers for the mixing also are not particularly limited. Examples thereof include Mechanofusion, hybridizers, Angmill, Mechano Micros, Micros, jet mills, hybrid mixers, kneaders, fluidized-bed granulators, Loedige Mixer, spray dryers, and dispersers. Any one of these mixers may be used alone, or any desired combination of two or more thereof may be used.

One or more of those specific techniques of mixing may be suitably selected according to the kinds of the raw material for negative electrode, crosslinking agent, etc. to be used. In general, when mechanical dry mixing with a Mechanofusion, hybridizer, or the like is used, the crosslinking agent is apt to be attached to step parts in the surface of the raw material for negative electrode. When wet mixing is used, the crosslinking agent is apt to come into intraparticle interstices of the raw material for negative electrode. When a powder mixer in which weak shear only is applied to the particles, such as, e.g., a fluidized bed mixer or a paint shaker, is used, it is thought that a mixture in which the crosslinking agent is adherent to the surface of the raw material for negative electrode is obtained.

With respect to specific techniques for reacting a raw material for negative electrode with a crosslinking agent, the reaction may be conducted in a reaction solvent or may be conducted in a mixture solution containing other compounds, e.g., a crosslinking reaction initiator. In the case where a reaction solvent is used, pure water is preferred from the standpoints of safety and ease of handling. In reacting the raw material for negative electrode with the crosslinking agent, it is preferred to heat the reactants in order to improve reaction rate.

On the other hand, in the case of using the method (iii), details of the method are not particularly limited. The solvent is not limited in kind so long as the crosslinking agent can be dispersed, swelled, or dissolved therein. However, a solvent in which the crosslinking agent is soluble is preferred because this solvent enables easier production. For example, water, alcohols such as ethanol, and other organic solvents such as benzene, toluene, and xylene may be used satisfactorily. However, it is preferred to use a crosslinking agent which can be dispersed, swelled, or dissolved in water, because this method is reduced in environmental burden and the step is inexpensive. For dissolving, dispersing, or swelling a crosslinking agent, a mixing/dispersing device such as, e.g., a disperser or kneader may be used to bring the crosslinking agent into contact with the solvent. For the mixing, either a method in which the liquid is added to the particles or a method in which the particles are added to the liquid may be employed satisfactorily. For impregnation, any apparatus capable of mixing the liquid with the powder, such as, e.g., a disperser or kneader, may be used without particular limitations. During the mixing, any concentration ranging from a low solid concentration to a high solid concentration can be selected at will. Besides such techniques, spraying such as, e.g., spray drying can be used for impregnation.

Examples of techniques for drying those materials include spray drying with a spray dryer or the like, shelf drying in which the materials are dried in a stationary state, a method in which the materials are dried by introducing heat energy while being mixed with stirring, and vacuum drying. However, any technique capable of reducing solvent content may be used without especially posing a problem.

The negative-electrode active material (surface-crosslinked active material) obtained may be subjected to pulverization, classification, etc. according to need, and this is preferred. In a specific method for reacting a raw material for negative electrode with a crosslinking agent, the reaction may be conducted in a solvent containing the crosslinking agent dispersed therein or may be conducted in a reaction solvent newly added after removing the dispersion solvent. In the case of conducting the reaction in a reaction solvent, pure water is preferred from the standpoint of ease of handling.

4. Negative-Electrode Active Material (Surface-Crosslinked Active Material)

The properties of the negative-electrode active material (surface-crosslinked active material) which will be described later were determined by the same procedures as for determining the properties of the raw material for negative electrode described above, except that the sample to be examined was replaced by the negative-electrode active material (surface-crosslinked active material).

(Properties of Negative-Electrode Active Material (Surface-Crosslinked Active Material))

It is desirable that the negative-electrode active material (surface-crosslinked active material) should satisfy any one of the following (1) to (11) or simultaneously satisfy two or more thereof. When negative-electrode active materials (surface-crosslinked active materials) showing such properties are to be used as a negative-electrode active material for a lithium ion secondary battery, one of these may be used alone or a combination of any desired two or more thereof in any desired proportion may be used.

(1) X-Ray Parameter

The negative-electrode active material (surface-crosslinked active material) preferably has a value of d (interplanar spacing) for the lattice planes (002), as determined by X-ray diffractometry in accordance with the method of the Japan Society for Promotion of Scientific Research, of 0. 335 nm or larger. It is desirable that the value of d should be generally 0.360 nm or smaller, preferably 0.345 nm or smaller, more preferably 0.337 nm or smaller. The crystallite size (Lc) of the carbon material, as determined by X-ray diffractometry in accordance with the method of the Japan Society for Promotion of Scientific Research, is generally 30 nm or larger, preferably 50 nm or larger, more preferably 80 nm or larger. In case where the value of Lc of the material is smaller than the lower limit of that range, this material has reduced crystallinity and there is a possibility that the increase in initial irreversible capacity might be enhanced.

(2) Ash Content

The ash content of the negative-electrode active material (surface-crosslinked active material) is generally 1% by mass or lower, preferably 0.5% by mass or lower, especially preferably 0.1% by mass or lower, based on the whole negative-electrode active material (surface-crosslinked active material). When the ash content thereof exceeds the upper limit of that range, there are cases where battery performance deterioration caused by reaction with the electrolyte during charge/discharge becomes not negligible.

(3) Volume-Average Particle Diameter

With respect to the volume-average particle diameter of the negative-electrode active material (surface-crosslinked active material), the volume-average particle diameter (median diameter) thereof as determined by the laser diffraction/scattering method is generally 1 $\mu$m or larger, preferably 3 $\mu$m or larger, more preferably 5 $\mu$m or larger, even more preferably 7 $\mu$m or larger. The upper limit thereof is generally 100 $\mu$m or smaller, preferably 50 $\mu$m or smaller, more preferably 40 $\mu$m or smaller, even more preferably 30 $\mu$m or smaller, especially preferably 25 $\mu$m or smaller. When the volume-average particle diameter thereof is smaller than the lower limit of that range, there are cases where irreversible capacity increases, leading to a loss in initial battery capacity. When the volume-average particle diameter thereof exceeds the upper limit of that range, there are cases where such a negative-electrode active material is undesirable from the standpoint of battery production because an uneven coating surface is apt to result when an electrode plate is formed.

(4) Raman R Value, Raman Half-Value Width

The Raman R value of the negative-electrode active material (surface-crosslinked active material) as determined by the argon ion laser Raman spectroscopy is as follows. The lower limit thereof is generally 0.03 or higher, preferably 0.1 or higher, more preferably 0.15 or higher. The upper limit thereof is generally 0.6 or lower, preferably 0.5 or lower. When the Raman R value thereof is lower than the lower limit of that range, the surface of such particles has too high crystallinity and there are cases where the number of interlaminar sites into which lithium comes with charge/discharge decreases. Namely, there are cases where suitability for charge decreases. Furthermore, there are cases where when this negative-electrode active material is applied to a current collector and the resultant negative electrode is densified by pressing, then crystal orientation is apt to occur in directions parallel to the electrode plate, leading to a decrease in load characteristics. On the other hand, when the Raman R value thereof exceeds the upper limit of that range, the surface of such particles has reduced crystallinity and there are cases where this negative-electrode active material has enhanced reactivity with an electrolyte, leading to a decrease in efficiency and enhanced gas evolution.
The Raman half-value width around 1,580 cm$^{-1}$ of the negative-electrode active material (surface-crosslinked active material) is not particularly limited. However, the half-value width thereof is generally 15 cm$^{-1}$ or larger, preferably 20 cm$^{-1}$ or larger. The upper limit thereof is generally 70 cm$^{-1}$ or smaller, preferably 60 cm$^{-1}$ or smaller, more preferably 50 cm$^{-1}$ or smaller. When the Raman half-value width thereof is smaller than the lower limit of that range, the surface of such particles has too high crystallinity and there are cases where the number of interlaminar sites into which lithium comes with charge/discharge decreases. Namely, there are cases where suitability for charge decreases. Furthermore, there are cases where when this negative-electrode active material is applied to a current collector and the resultant negative electrode is densified by pressing, then crystal orientation is apt to occur in directions parallel to the electrode, leading to a decrease in load characteristics. On the other hand, when the Raman half-value width thereof exceeds the upper limit of that range, the surface of such particles has reduced crystallinity and there are cases where this negative-electrode active material has enhanced reactivity with an electrolytic solution, leading to a decrease in efficiency and enhanced gas evolution.

(5) BET Specific Surface Area

The BET specific surface area, i. e. , the specific surface area determined by the BET method, of the negative-electrode active material (surface-crosslinked active material) is generally 0.1 m$^2$/g or larger, preferably 0.7 m$^2$/g or larger, more preferably 1 m$^2$/g or larger, even more preferably 1.5 m$^2$/g or larger. The upper limit thereof is generally 25 m$^2$/g or smaller, preferably 15 m$^2$/g or smaller, more preferably 10 m$^2$/g or smaller. When the BET specific surface area thereof is smaller than the lower limit of that range, there are cases where this negative-electrode active material, when used, is apt to have poor lithium acceptance during charge and is apt to cause lithium deposition on the electrode surface. On the other hand, when the specific surface area thereof exceeds the upper limit of that range, there are cases where this negative-electrode active material, when used, is apt to have enhanced reactivity with an electrolyte to enhance gas evolution, making it difficult to obtain a preferred battery.

(6) Pore Distribution

The pore distribution of the negative-electrode active material (surface-crosslinked active material) as determined by mercury porosiometry (mercury penetration method) may be in the following range. The lower limit of the amount of intraparticle interstices corresponding to a diameter of from 0.01 $\mu$m to 1 $\mu$m and particle surface irregularities formed by steps is generally 0.01 mL/g or larger, preferably 0.05 mL/g or larger, more preferably 0.1 mL/g or larger. The upper limit thereof is generally 0.6 mL/g or smaller, preferably 0.4 mL/g or smaller, more preferably 0.3 mL/g or smaller. When the amount thereof exceeds the upper limit of that range, there are cases where a large amount of a binder is necessary in electrode formation. When the amount thereof is smaller than the lower limit of that range, there are cases where high-current-density charge/discharge characteristics decrease and the effect of diminishing electrode expansion/shrinkage during charge/discharge is difficult to obtain.

The total pore volume of the negative-electrode active material may be in the following range. The lower limit thereof is preferably 0.1 mL/g or larger, more preferably 0.25 mL/g or larger. The upper limit thereof is generally 10 mL/g or smaller, preferably 5 mL/g or smaller, more preferably 2 mL/g or smaller. When the total pore volume thereof exceeds the upper limit of that range, there are cases where a large amount of a binder is necessary in electrode formation. When the total pore volume thereof is smaller than the lower limit, there are cases where the dispersing effect of a thickener or binder in electrode formation is not obtained.

The average pore diameter of the negative-electrode active material may be in the following range. The lower limit thereof is preferably 0.05 $\mu$m or larger, more preferably 0.1 $\mu$m or larger, even more preferably 0.5 $\mu$m or larger. The upper limit thereof is generally 80 $\mu$m or smaller, preferably 50 $\mu$m or smaller, more preferably 20 $\mu$m or smaller. When the average pore diameter thereof exceeds the upper limit of that range, there are cases where a large amount of a binder is necessary. When the average pore diameter thereof is smaller than the lower limit of that range, there are cases where high-current-density charge/discharge characteristics decrease.

(7) Roundness

With respect to the degree of sphericity of the negative-electrode active material (surface-crosslinked active material), the roundness of the particles having a particle diameter in the range of 10-40 $\mu$m is preferably 0.85 or higher, more preferably 0.87 or higher, even more preferably 0.9 or higher. High roundness values are preferred because they are effective in improving high-current-density charge/discharge characteristics.

(8) True Density

The true density of the negative-electrode active material (surface-crosslinked active material) is generally 1.9 g/cm$^3$ or higher, preferably 2 g/cm$^3$ or higher, more preferably 2.1 g/cm$^3$ or higher, even more preferably 2.2 g/cm$^3$ or higher. The upper limit thereof is 2.26 g/cm$^3$ or lower. This upper limit is a theoretical value for graphite. When the true density thereof is lower than the lower limit of that range, there are cases where this carbon has too low crystallinity, resulting in an increase in initial irreversible capacity.

(9) Tap Density

It is desirable that the tap density of the negative-electrode active material (surface-crosslinked active material) should be generally 0.1 g/cm$^3$ or higher, preferably 0.5 g/cm$^3$ or higher, more preferably 0.7 g/cm$^3$ or higher, especially preferably 1 g/cm$^3$ or higher. The tap density thereof is preferably 2 g/cm$^3$ or lower, more preferably 1.8 g/cm$^3$ or lower, especially preferably 1.6 g/cm$^3$ or lower. When the tap density of the negative-electrode active material is lower than the lower limit of that range, there are cases where this negative-electrode active material, when used, is less apt to have a high loading density and cannot give a battery having a high capacity. On the other hand, when the tap density thereof exceeds the upper limit of that range, the amount of interparticle interstices in the electrode is too small and it is difficult to secure electrical conductivity among the particles. There are hence cases where preferred battery characteristics are difficult to obtain. The tap density thereof also is determined by the same method as described above and is defined thereby.

(10) Orientation Ratio (Powder)

The orientation ratio of the negative-electrode active material (surface-crosslinked active material) may be in the following range. It is generally 0.005 or higher, preferably 0.01 or higher, more preferably 0.015 or higher. The upper limit thereof is theoretically 0.67 or lower. When the orientation ratio thereof is lower than the lower limit of that range, there are cases where high-density charge/discharge characteristics decrease.

(11) Aspect Ratio (Powder)

The aspect ratio of the negative-electrode active material (surface-crosslinked active material) is theoretically 1 or higher. The upper limit thereof is generally 10 or lower, preferably 8 or lower, more preferably 5 or lower. When the aspect ratio thereof exceeds the upper limit of that range, there are cases where streak lines generate in electrode plate formation and an even coating surface cannot be obtained, leading to a decrease in high-current-density charge/discharge characteristics.

(Change through Crosslinking)

One index to the effect of crosslinking is a change in BET specific surface area. Namely, that a BET specific surface area of the negative-electrode active material (surface-crosslinked active material) decreases, compared with a raw material for negative electrode which has not been crosslinked, shows that inner parts of micropores have been blocked with a product of crosslinking. The decrease in BET specific surface area is preferably 10% or larger, more preferably 15% or larger, even more preferably 25% or larger. The upper limit thereof is generally 80% or smaller, preferably 70% or smaller, more preferably 50% or smaller. When the decrease in BET specific surface area is smaller than the lower limit of that range, there is a possibility that the infiltration of the crosslinking agent into the raw material for negative electrode might have been insufficient. There are hence cases where irreversible capacity is not sufficiently reduced. On the other hand, in case where the decrease therein exceeds the upper limit of that range, this negative-electrode active material has an excessively reduced BET specific surface area and there is a possibility that suitability for charge might decrease.

<Negative Electrode for Lithium Ion Secondary Battery>

The negative electrode for lithium ion secondary batteries of the invention (hereinafter often abbreviated to "negative electrode of the invention") is characterized in that it includes a current collector and an active-material layer formed on the current collector and that the active-material layer contains a binder and the negative-electrode active material (surface-crosslinked active material) for lithium ion secondary batteries of the invention.

(Binder)

As the binder, one having olefinic unsaturated bonds in the molecule is generally used. The kind thereof is not particularly limited. Examples of the binder having olefinic unsaturated bonds include styrene/butadiene rubbers, styrene/isoprene/styrene rubbers, acrylonitrile/butadiene rubbers, butadiene rubber, and ethylene/propylene/diene copolymers. By using such a binder having olefinic unsaturated bonds, the active-material layer can be reduced in the property of swelling in electrolytes. Styrene/butadiene rubbers are preferred of those from the standpoint of easy availability.
By using such a binder having olefinic unsaturated bonds in combination with the active material described above, the strength of the negative-electrode can be heightened. When the negative electrode has high strength, this negative electrode is inhibited from deteriorating with charge/discharge and can have a prolonged cycle life. In the negative electrode according to the invention, the strength of adhesion between the active-material layer and the current collector is high. Because of this, it is presumed that even when the content of the binder in the active-material layer is reduced, this does not arouse a problem that the active-material layer peels off the current collector when the negative electrode is wound in battery production.
The binder having olefinic unsaturated bonds in the molecule desirably is one having a high molecular weight or one having a high proportion of unsaturated bonds. Specifically, the binder having a high molecular weight desirably is one whose molecular weight is in the following range. The molecular weight thereof is generally 10,000 or higher, preferably 50,000 or higher, and the upper limit thereof is generally 1,000,000 or lower, preferably 300,000 or lower. The binder having a high proportion of unsaturated bonds desirably is one in which the number of moles of olefinic unsaturated bonds per g of the whole binder is generally $2.5 \times 10^{-7}$ or larger, preferably $8 \times 10^{-7}$ or larger, and is generally $1 \times 10^{-4}$ or smaller, preferably $5 \times 10^{-6}$ or smaller.
To satisfy at least either of the requirement concerning molecular weight and the requirement concerning the proportion of unsaturated bonds suffices for the binder. However, a binder which simultaneously satisfies the two requirements is more preferred. When the molecular weight of the binder having olefinic unsaturated bonds is too low, there are cases where the active-material layer has poor mechanical strength. When the molecular weight thereof is too high, there are cases where the active-material layer has poor flexibility. When the proportion of olefinic unsaturated bonds in the binder is too low, there are cases where the effect of improving strength is lessened. When the proportion thereof is too high, there are cases where the active-material layer has poor flexibility.
The binder having olefinic unsaturated bonds desirably is one whose degree of unsaturation is in the following range. The degree of unsaturation thereof is generally 15% or higher, preferably 20% or higher, more preferably 40% or higher. The upper limit thereof is generally 90% or lower, preferably 80% or lower. The term "degree of unsaturation" means the proportion (%) of double bonds to the repeating units of the polymer.

In the invention, a binder having no olefinic unsaturated bonds can be used in combination with the binder having olefinic unsaturated bonds described above, unless this lessens the effects of the invention. The proportion of the binder having no olefinic unsaturated bonds to the binder having olefinic unsaturated bonds is generally 150% by mass or lower, preferably 120% by mass or lower. By using a combination with the binder having no olefinic unsaturated bonds, applicability can be improved. However, when the amount of this binder used is too large, there are cases where the active-material layer has reduced strength.

Examples of the binder having no olefinic unsaturated bonds include polysaccharide thickeners such as methyl cellulose, carboxymethyl cellulose, starch, carrageenan, pullulan, guar gum, and xanthan gum; polyethers such as poly(ethylene oxide) and poly(propylene oxide); vinyl alcohol polymers such as poly(vinyl alcohol) and poly(vinyl butyral); polyacids such as poly(acrylic acid) and poly(methacrylic acid) or metal salts of these polymers; fluoropolymers such as poly(vinylidene fluoride); and alkane polymers such as polyethylene and polypropylene and copolymers thereof.

When the negative-electrode active material for a lithium ion secondary battery of the invention, in which surface functional groups have been crosslinked, is used in combination with the binder having olefinic unsaturated bonds described above, the binder proportion in the active-material layer can be reduced as compared with conventional ones. Specifically, the proportion by mass of the negative-electrode active material for a lithium ion secondary battery of the invention to the binder (which may optionally be a mixture of a binder having unsaturated bonds and a binder having no unsaturated bonds as described above) may be in following range. The proportion thereof in terms of dry mass ratio between these is generally 90/10 or higher, preferably 95/5 or higher. The upper limit thereof is generally 99.9/0.1 or lower, preferably 99.5/0.5 or lower, more preferably 99/1 or lower. When the binder proportion is too high, there are cases where a decrease in capacity and an increase in resistance are apt to result. When the binder proportion is too low, there are cases where the electrode has poor strength.

(Production of Negative Electrode)

The negative electrode of the invention may be formed by dispersing the negative-electrode active material for a lithium ion secondary battery of the invention described above and the binder in a dispersion medium to prepare a slurry and applying the slurry to a current collector. As the dispersion medium, use can be made of an organic solvent, e. g. , an alcohol, or water. A conductive material may be further added to the slurry according to need. Examples of the conductive material include carbon blacks such as acetylene black, ketjen black, and furnace black and fine powders having an average particle diameter of 1 μm or smaller made of copper, nickel, or an alloy thereof. The amount of the conductive material to be added is generally about 10% by mass or smaller based on the negative-electrode active material for a lithium ion secondary battery of the invention.

As the current collector to which the slurry is applied, a known one can be employed. Examples thereof include thin metal films such as rolled copper foils, electrolytic copper foils, and stainless-steel foils. The thickness of the current collector is generally 5 μm or larger, preferably 9 μm or larger. The upper limit thereof is generally 30 μm or smaller, preferably 20 μm or smaller. After the slurry is applied to the current collector, the coating is dried in dry air or in an inert atmosphere at a temperature which is generally 60°C or higher, preferably 80°C or higher, and the upper limit of which is usually 200°C or lower, preferably 195°C or lower. Thus, an active-material layer is formed.

The thickness of the active-material layer obtained by applying and drying the slurry is generally 5 μm or larger, preferably 20 μm or larger, more preferably 30 μm or larger. The upper limit thereof is generally 200 μm or smaller, preferably 100 μm or smaller, more preferably 75 μm or smaller. When the active-material layer is too thin, the resultant negative electrode has poor practicability in view of the particle diameter of the active material. When the active-material layer is too thick, there are cases where the function of storing/releasing lithium at a high current density is difficult to obtain sufficiently.

<Lithium Ion Secondary Battery>

The basic constitution of the lithium ion secondary battery of the invention is the same as that of known lithium ion secondary batteries. The lithium ion secondary battery of the invention usually includes a positive electrode and a negative electrode which each are capable of storing /releasing lithium ions and further includes an electrolyte. As the negative electrode is used the negative electrode of the invention described above.

(Positive Electrode)

The positive electrode is one obtained by forming a positive-electrode active-material layer containing a positive-electrode active material and a binder on a current collector.

Examples of the positive-electrode active material include metal chalcogen compounds capable of storing /releasing alkali metal cations such as lithium ions during charge/discharge. Examples of the metal chalcogen compounds include transition metal oxides such as oxides of vanadium, oxides of molybdenum, oxides of manganese, oxides of chromium, oxides of titanium, and oxides of tungsten; transition metal sulfides such as sulfides of vanadium, sulfides of molybdenum, sulfides of titanium, and $CuS$; phosphorus-sulfur compounds of transition metals, such as $NiPS_3$ and $FePS_3$; transition metal selenides such as $VSe_2$ and $NbSe_3$; transition metal composite oxides such as $Fe_{0.25}V_{0.75}S_2$ and $Na_{0.1}CrS_2$; and transition metal composite sulfides such as $LiCoS_2$ and $LiNiS_2$.

Preferred of these are $V_2O_5$, $V_5O_{13}$, $VO_2$, $Cr_2O_5$, $MnO_2$, $TiO$, $M_oV_2O_8$, $LiCoO_2$, $LiNiO_2$, $LiMn_2O_4$, $TiS_2$, $V_2S_5$, $Cr_{0.25}V_{0.75}S_2$, and $Cr_{0.5}V_{0.5}S_2$. Especially preferred are $LiCoO_2$, $LiNiO_2$, $LiMn_2O_4$, and lithium-transition metal composite oxides obtained by partly replacing the transition metals of these composite oxides with other metals. These positive-electrode active materials may be used alone or as a mixture of two or more thereof.

As the binder for binding the positive-electrode active material, a known one selected at will can be used. Examples thereof include inorganic compounds such as silicates and water glass and resins having no unsaturated bonds, such as Teflon (registered trademark) and poly(vinylidene fluoride). Preferred of these are resins having no unsaturated bonds. When a resin having unsaturated bonds is used as the binder for binding the positive-electrode active material, there are cases where this resin is degraded during an oxidation reaction. The weight-average molecular weight of each of those resins may be in the following range. It is generally 10,000 or higher, preferably 100,000 or higher. The upper limit thereof is generally 3,000,000 or lower, preferably 1,000,000 or lower.

A conductive material may be incorporated into the positive-electrode active-material layer in order to improve the conductivity of the electrode. The conductive material is not particularly limited so long as it can impart conductivity to the active material when mixed therewith in an appropriate amount. Examples thereof generally include carbon powders such as acetylene black, carbon black, and graphite and fibers, powders, and foils of various metals.

A positive-electrode plate may be formed using the same technique for producing the negative electrode, by slurrying the position-electrode active material and the binder with a solvent, applying the slurry to a current collector, and drying the coating. As the current collector for the positive electrode, use may be made of aluminum, nickel, SUS, or the like without any particular limitation.

(Electrolyte)

As the electrolyte may be used, for example, a nonaqueous electrolyte prepared by dissolving one or more lithium salts in a nonaqueous solvent or an electrolyte obtained by converting the nonaqueous electrolyte into a gel form, rubber form, solid sheet form, or the like with an organic high-molecular compound, etc.

The nonaqueous solvent to be used in the nonaqueous electrolyte is not particularly limited, and use may be made of one suitably selected from known nonaqueous solvents which have been proposed as solvents for nonaqueous electrolytes. Examples thereof include chain carbonates such as diethyl carbonate, dimethyl carbonate, and ethyl methyl carbonate; cyclic carbonates such as ethylene carbonate, propylene carbonate, and butylene carbonate; chain ethers such as 1,2-dimethoxyethane; cyclic ethers such as tetrahydrofuran, 2-methyltetrahydrofuran, sulfolane, and 1,3-dioxolane; chain esters such as methyl formate, methyl acetate, and methyl propionate; and cyclic esters such as γ-butyrolactone and γ-valerolactone. Any one of these nonaqueous solvents may be used alone, or a mixture of two or more thereof may be used. However, a mixed-solvent combination including a cyclic carbonate and a chain carbonate is preferred.

(Lithium Salt)

The lithium salt to be used in the nonaqueous electrolyte also is not particularly limited, and use may be made of one suitably selected from known lithium salts which are known to be usable in this application. Examples thereof include inorganic lithium salts such as halides, e.g., $LiCl$ and $LiBr$, perhalogen acid salts, e.g., $LiClO_4$, $LiBrO_4$, and $LiClO_4$, and inorganic fluoride salts, e.g., $LiPF_6$, $LiBF_4$, and $LiAsF_6$; and fluorine-containing organolithium salts such as perfluoroalkanesulfonic acid salts, e.g., $LiCF_3SO_3$ and $LiC_4F_9SO_3$, and perfluoroalkanesulfonimide salts, e.g., lithiumtrifluorosulfonimide ($(CF_3SO_2)_2NLi$). Such lithium salts may be used alone or as a mixture of two or more thereof. The concentration of the lithium salt in the nonaqueous electrolyte is generally in the range of from 0.5 M to 2.0 M.

In the case where the nonaqueous electrolyte described above is used after having been converted to a gel form, rubber form, or solid sheet form by incorporating an organic high-molecular compound into the solution, examples of the organic high-molecular compound include polyether polymer compounds such as poly(ethylene oxide) and poly(propylene oxide); polymers obtained by crosslinking polyether polymer compounds; vinyl alcohol polymer compounds such as poly(vinyl alcohol) and poly (vinyl butyral); insolubilized vinyl alcohol polymer compounds; polyepichlorohydrin; polyphosphazenes; polysiloxanes; vinyl polymer compounds such as polyvinylpyrrolidone, poly(vinylidene carbonate), and polyacrylonitrile; and polymer copolymers such as poly(ω-methoxyoligooxyethylene methacrylate), poly(ω-methoxyoligooxyethylene methacrylate-co-methyl methacrylate), and poly(hexafluoropropylene-vinylidene fluoride).

The nonaqueous electrolyte described above may further contain a film-forming agent. Examples of the film-forming agent include carbonate compounds such as vinylene carbonate, vinyl ethylene carbonate, vinyl ethyl carbonate, methyl phenyl carbonate, fluoroethylene carbonate, and difluoroethylene carbonate; alkene sulfides such as ethylene sulfide and propylene sulfide; sultone compounds such as 1,3-propanesultone and 1,4-butanesultone; and acid anhydrides such as maleic anhydride and succinic anhydride.

In the case where a film-forming agent is used, the content thereof is generally 10% by mass or lower, preferably 8% by weight or lower, more preferably 5% by weight or lower, especially preferably 2% by weight or lower. When the content of the film-forming agent is too high, there are cases where not only initial irreversible capacity increases but also the film-forming agent adversely influences other battery characteristics to reduce low-temperature characteristics, rate characteristics, etc.

As the electrolyte can also be used a polymeric solid electrolyte which is a conductor for alkali metal cations, e.g., lithium ions. Examples of the polymeric solid electrolyte include the polyether polymer compounds shown above which contain a lithium salt dissolved therein and polymers which are polyethers in which terminal hydroxyl groups have been replaced with an alkoxide.

(Separator)

A porous separator such as, e.g., a porous film or a nonwoven fabric is usually interposed between the positive electrode and negative electrode in order to prevent short-circulating between the electrodes. In this case, the nonaqueous electrolyte to be used is infiltrated into the porous separator. As the material of the separator, use may be made of a polyolefin such as polyethylene or polypropylene, a polyethersulfones, or the like. Preferred are polyolefins.

The lithium ion secondary battery of the invention is not particularly limited in type. Examples of battery types include a cylinder type including sheet electrodes spirally wound together with separators, a cylinder type having an inside-out structure based on a combination of pellet electrodes and separators, and a coin type including pellet electrodes superposed together with a separator. A battery of any of these types is disposed in any desired case, whereby the battery can be used in any desired shape such as, e.g., a coin, cylindrical, or prismatic type.

In assembling the lithium ion secondary battery of the invention, procedures therefor are not particularly limited. The battery may be assembled by a proper procedure according to the structure of the battery. For example, a negative electrode is placed in a case, and an electrolyte and a separator are disposed thereon. Furthermore, a positive electrode is placed so as to face the negative electrode, and the case is caulked together with a gasket and a cover plate. Thus, a battery can be fabricated.

(Effects)

When the negative-electrode active material obtained by crosslinking a surface functional group of a raw material for negative electrode is used for producing a lithium ion secondary battery, then electrode formation is facilitated and irreversible capacity is reduced. The mechanisms of these effects are unclear. Although the mechanisms of these effects should not be construed as limiting the invention, the mechanism by which electrode formation is facilitated is presumed to be as follows. Because the step of reaction for crosslinking is conducted before electrode formation, an unnecessary ingredient, e.g., a crosslinking agent, is prevented from remaining adherent to the surface of the particles and that effect is thus produced.

On the hand kind, the mechanism of the effect of reducing initial irreversible capacity is presumed to be as follows. Because surface functional groups of the raw material for negative electrode, which are an important factor in irreversible capacity, have been crosslinked, the negative-electrode active material does not unnecessarily react with the electrolyte during the storage/release of lithium. This is thought to have brought about that effect.

EXAMPLES

The invention will be explained below in more detail by reference to Examples. However, the invention should not be construed as being limited to the following Examples.
The BET specific surface area, tap density, volume-average particle diameter (hereinafter, often referred to simply as "average particle diameter"), and roundness shown below were determined by the methods described above.

Example 1

(Production of Negative-Electrode Active Material for Lithium Ion Secondary Battery)

In a stainless-steel vessel having a capacity of 0.75 L, 19.4 g of diethyl sebacate (Woko Pure Chemical) as a crosslinking agent, 150 g of rounded natural-graphite particles which had undergone a rounding treatment (BET specific surface area, 5.8 m$^2$/g; average particle diameter, 23 μm; roundness, 0.92) as natural graphite, and 100 g of pure water were stirred with a homodisperser for 5 minutes. Thereto was added an aqueous solution prepared by dissolving 6.2 g of lithium hydroxide monohydrate in 50 g of pure water. The ingredients were further stirred/mixed for 2 hours. The resultant mixture was placed in a stainless-steel vat and heated at 120°C for 12 hours in N$_2$ gas to thereby react surface functional groups of the active material with the crosslinking agent and simultaneously remove the pure water. The graphite particles thus treated were passed through a sieve having an opening size of 45 μm to obtain a negative-electrode active material for a lithium ion secondary battery. Physicochemical properties of the negative-electrode active material for a lithium ion secondary battery obtained were as shown in Table 1.

(Production of Negative Electrode)

Ten grams of the negative-electrode active material for a lithium ion secondary battery obtained above was mixed with 10 g of an aqueous dispersion of carboxymethyl cellulose as a thickener (carboxymethyl cellulose concentration, 1% by mass) and 0.2 g of an aqueous dispersion of a styrene/butadiene rubber (degree of unsaturation, 75%; molecular weight, 120,000) as a binder (styrene/butadiene rubber concentration, 50% by mass) by means of a high-speed mixer to obtain a slurry. This slurry was applied to a copper foil (current collector) by the doctor blade method and dried. This coated foil was pressed with a roll press at a linear density of 20-300 kg/cm to thereby form an active-material layer. The active-material layer after drying had a mass of 10 mg/cm$^2$ and a density of 1.6 g/mL, and the average electrode thickness was 68 μm. The negative electrode (negative electrode for lithium ion secondary batteries) produced by the procedure described above is referred to as negative electrode of Example.

(Evaluation of Initial Battery Characteristics (Initial Irreversible Capacity))

A disk having a diameter of 12.5 mm was punched out of the negative electrode and vacuum-dried at 110°C to obtain a negative electrode for battery evaluation. This negative electrode for battery evaluation was superposed on a counter electrode (sheet of metallic lithium; thickness, 0.5 mm; diameter, 14 mm) through a separator impregnated with an electrolyte prepared by mixing 1 M LiPF$_6$ with a 3:7 (vol%) mixture of ethylene carbonate and ethyl methyl carbonate. Thus, a half cell for a charge/discharge test was produced. This half cell was charged at a current of 0.2 mA to 0.01 V (Li/Li$^+$) (i. e. , intercalation of lithium ions into the negative electrode was conducted), and was further charged at this voltage until the current capacity per g of the negative-electrode layer reached 350 mAh. Subsequently, the half cell was discharged to 1.5 V at a current of 0.4 mA. The difference between the quantity of electricity charged and the quantity of electricity discharged until the voltage reached 0. 8 V was taken as initial irreversible capacity (mAh/g). The results obtained are shown in Table 1.

(Evaluation of High-Rate Discharge Characteristics)

Subsequently to the test shown above, the half cell was charged to 0.005 V (Li/Li$^+$) at a current of 0.2 mA, and further continuously charged until the current value decreased to 0. 02 mA. This half cell was then discharged at a current of 0.4 mA to 1.5 V. This charge/discharge operation was repeated two times. Thereafter, a charge/discharge operation was further repeated in the same manner, except that the same charge conditions as shown above were used and the discharge-side current value only was changed to 0.7, 3.5, and 7.0 mA (third to fifth charge/discharge operations). High-rate discharge characteristics were evaluated using equation 1. The results obtained are shown in Table 1.

```
(Equation 1)

High-rate  discharge  characteristics  (%)  =  [(discharge

capacity in 7.0-mA discharge)/(discharge capacity in 0.7-mA

discharge)]×100
```

(Evaluation of Cycle Characteristics)

A positive electrode having a length of 40 mm and a width of 30 mm which was constituted of an aluminum foil current collector having a thickness of 15 $\mu$m and coated on both sides with LiCoO$_2$ and a negative electrode having a length of 40 mm and a width of 30 mm produced by the method described above were disposed face to face through a porous polyethylene film separator to obtain a multilayer structure. This multilayer structure was enclosed in an aluminum laminate film together with an electrolyte prepared by dissolving 2 parts by mass of vinylene carbonate in 100 parts by mass of an ethylene carbonate/ethyl methyl carbonate mixed solvent (volume ratio, 3/7) and dissolving 1 mol/L LiPF$_6$ in the solution. Thus, a lithium ion secondary battery for cycle characteristics evaluation was obtained. This battery was allowed to stand at ordinary temperature for 24 hours. Thereafter, this battery was charged at a current density of 49 mA/cm$^2$ until the difference in potential between the electrodes reached 4.2 V and then discharged at 70 mA/cm$^2$ until the potential difference decreased to 3.0 V. This operation as one cycle was repeated 206 times. The value obtained by dividing the discharge capacity of the battery in the 206th cycle by the discharge capacity in the 6th cycle was taken as cycle characteristics. The results obtained are shown in Table 1.

```
(Equation 2)

Cycle characteristics (%) = [(discharge capacity in 206th

cycle)/(discharge capacity in 6th capacity)]×100
```

Example 2

A negative electrode was produced in the same manner as in Example 1, except that 19.4 g of dibutyl sebacate (Wako Pure Chemical) was used as a crosslinking agent. The results obtained are shown in Table 1.

Example 3

Twenty grams of SEQUAREZ 755 (polyhydric alcohol/carbonyl adduct manufactured by Sansho Co., Ltd.) (polymers of the type having a glyoxal polyol reaction product consisting of one anhydroglucose unit and two glyoxal units) as a crosslinking agent and 5 g of rounded natural-graphite particles which had undergone a rounding treatment (BET specific surface area, 5.8 m$^2$/g; average particle diameter, 23 $\mu$m; roundness, 0.92) as natural graphite were stirred for 1 hour in a 0.75-L stainless-steel vessel with Ploughshare Mixer, manufactured by Pacific Machinery & Engineering. The resultant mixture was evenly spread in a stainless-steel vat and dried with heating at 150°C for 12 hours in N$_2$ gas. The graphite particles thus treated were passed through a sieve having an opening size of 45 $\mu$m to obtain a negative-electrode active material for a lithium ion secondary battery. Except the procedure described above, a negative electrode was produced in the same manner as in Example 1. The results obtained are shown in Table 1.

Example 4

The negative-electrode active material for a lithium ion secondary battery obtained in Example 2 was evenly spread in a stainless-steel vat. Using a box type furnace (manufactured by Koyo Lindberg Ltd.), the negative-electrode active material in N$_2$ gas was heated at 5°C/min and kept at 1,000°C for 1 hour. Thereafter, the negative-electrode active material was cooled to room temperature at 10 °C/min and then passed through a sieve having an opening size of 45 $\mu$m to obtain a negative-electrode active material for a lithium ion secondary battery. Except the procedure described above, a negative electrode was produced in the same manner as in Example 1. The results obtained are shown in Table 1.

Example 5

A negative electrode was produced in the same manner as in Example 2, except that rounded natural-graphite particles which had undergone a rounding treatment (BET specific surface area, 5.0 m$^2$/g; average particle diameter, 24 $\mu$m; roundness, 0.91) were used as natural graphite. The results obtained are shown in Table 1.

Comparative Example 1

A negative electrode was produced in the same manner as in Example 1, except that in place of 10 g of the negative-electrode active material for a lithium ion secondary battery, use was made of a mixture of 8.6 g of the same rounded natural-graphite particles as those used in Example 1 (BET specific surface area, 5.8 m$^2$/g; average particle diameter, 23 $\mu$m; roundness 0.92), 1.1 g of diethyl sebacate, and 0.3 g of lithium hydroxide monohydrate. In the negative electrode produced under these conditions, the active-material layer peeled off the current collector after drying. The evaluation of initial battery characteristics was hence impossible. The results obtained are shown in Table 1.

Comparative Example 2

A negative electrode was produced in the same manner as in Example 1, except that in place of 10 g of the negative-electrode active material for a lithium ion secondary battery, use was made of a mixture of 8.9 g of the same rounded natural-graphite particles as those used in Example 1 (BET specific surface area, 5.8 m$^2$/g; average particle diameter, 23 $\mu$m; roundness 0.92) and 1.1 g of diethyl sebacate. In the negative electrode produced under these conditions, the active-material layer peeled off the current collector upon compaction after drying. The evaluation of initial battery characteristics was hence impossible. The results obtained are shown in Table 1.

Comparative Example 3

A negative electrode was produced in the same manner as in Example 1, except that in place of 10 g of the negative-electrode active material for a lithium ion secondary battery, use was made of 10 g of the same rounded natural-graphite particles as those used in Example 1 (BET specific surface area, 5.8 m$^2$/g; average particle diameter, 23 $\mu$m; roundness 0.92). This negative electrode was used to produce a half cell for a charge/discharge test. The half cell obtained was used to conduct the same evaluation of initial battery characteristics as in Example 1. The results obtained are shown in Table 1.

Comparative Example 4

A negative electrode was produced in the same manner as in Example 1, except that the rounded natural-graphite particles used in Example 5 (BET specific surface area, 5.0 m$^2$/g; average particle diameter, 24 $\mu$m; roundness, 0.91) were used as they were. The results obtained are shown in Table 1.

[Table 1]

| No. | Negative-electrode active material | State of electrode | Irreversible capacity (mAh/g) | High-rate discharge characteristics (%) | cycle characteristics (%) | BET specific surface area (m²/g) | Tap density (g/cm³) | Volume-average particle diameter, d50 (μm) | Roundness |
|---|---|---|---|---|---|---|---|---|---|
| Example 1 | graphite, surface-crosslinked | good | 28 | 87 | 84 | 2.4 | 1.06 | 22 | 0.93 |
| Example 2 | graphite, surface-crosslinked | good | 35 | 81 | 81 | 2.0 | 1.03 | 22 | 0.93 |
| Example 3 | graphite, surface-crosslinked | good | 33 | 86 | 81 | 3.0 | 1.08 | 22 | 0.92 |
| Example 4 | graphite, surface-crosslinked | good | 32 | 84 | 82 | 5.4 | 1.08 | 22 | 0.93 |
| Example 5 | graphite, surface-crosslinked | good | 31 | 83 | 80 | 1.7 | 0.96 | 23* | 0.92 |
| Comparative Example 1 | crosslinked during electrode formation | unable to be used because of peeling | unable to be measured | - | - | 5.8 | 1.00* | 23* | 0.92* |
| Comparative Example 2 | mixture with crosslinking agent | unable to be used because of peeling upon compaction | unable to be measured | - | - | 5.8 | 1.00* | 23* | 0.92* |
| Comparative Example 3 | graphite | good | 39 | 79 | 79 | 5.8 | 1.00 | 23 | 0.92 |
| Comparative Example 4 | graphite | good | 33 | 78 | 81 | 5.0 | 0.96 | 24 | 0.91 |

* Property values of the graphite used as raw material in Example 1 and Comparative Examples 1 to 3.

The following are apparent from the results given in Table 1. A comparison between the negative-electrode active material for a lithium ion secondary battery (surface-crosslinked active material) of Example 1 and the graphite of Comparative Example 3 shows that the negative-electrode active material of Example 1 has undergone a decrease in BET specific surface area due to the crosslinking of surface functional groups. In Comparative Example 1 and Comparative Example 2, the determination of battery characteristics was impossible because of troubles such as, e.g., the peeling of the active-material layer from the current collector during electrode production. In contrast, when the negative-electrode active material for a lithium ion secondary battery (surface-crosslinked active material) of Example 1 was used to produce a half cell, the electrode was in a satisfactory state. When this electrode was used to determine initial irreversible capacity, it was found that a reduction in irreversible capacity had been attained in Example 1 as compared with Comparative Example 3, in which no surface-crosslinking treatment had been conducted. Furthermore, a battery having excellent high-rate discharge characteristics and high cycle characteristics had been realized.

A comparison between the negative-electrode active material for a lithium ion secondary battery (surface-crosslinked active material) of Example 5 and the graphite of Comparative Example 4 shows that the negative-electrode active material of Example 5 had undergone a decrease in BET specific surface area due to the crosslinking of surface functional groups. When the negative-electrode active materials for lithium ion secondary batteries (surface-crosslinked active materials) of Example 2, Example 3, Example 4, and Example 5 were used to produce half cells, the electrodes were in a satisfactory state as in Example 1. Furthermore, in Examples 2 to 5 also, batteries having a reduced initial irreversible capacity, excellent high-rate discharge characteristics, and high cycle characteristics had been realized.

INDUSTRIAL APPLICABILITY

The negative electrode employing the negative-electrode active material for a lithium ion secondary battery of the invention has high electrode plate strength, satisfactory suitability for liquid infiltration, low initial irreversible capacity, excellent high-current-density charge/discharge characteristics, and high capacity retention through cycling. Namely, a lithium ion secondary battery excellent in various battery characteristics is realized according to the invention. Furthermore, according to the process of the invention for producing a negative-electrode active material for a lithium ion secondary battery, a negative-electrode active material having those advantages can be produced through simple steps. Thereafter, the invention can be advantageously utilized in various fields, e.g., electronic appliances, in which lithium secondary batteries are used.

**Claims**

1. A negative-electrode active material for a lithium ion secondary battery, which is capable of storing/releasing lithium ions, **characterized in that** the negative-electrode active material is obtained by reacting a surface functional group of a raw material for negative electrode with at least one crosslinking agent selected from the group consisting of multidentate alcohols, multidentate ethers, multidentate carboxylic acids, multidentate esters, and compounds having a structure composed of a combination thereof.

2. The negative-electrode active material for a lithium ion secondary battery according to claim 1, wherein the raw material for negative electrode is a carbonaceous substance.

3. The negative-electrode active material for a lithium ion secondary battery according to claim 1 or 2, wherein the surface functional group of the raw material for negative electrode is at least one kind of functional groups selected from the group consisting of a hydroxyl group, a carboxyl group, an ether group, a carbonyl group, and an ester group.

4. The negative-electrode active material for a lithium ion secondary battery according to any one of claims 1 to 3, wherein the crosslinking agent is a compound having a diester structure.

5. The negative-electrode active material for a lithium ion secondary battery according to any one of claims 1 to 3, wherein the crosslinking agent is a sebacic acid diester or a polyhydric alcohol/carbonyl adduct.

6. The negative-electrode active material for a lithium ion secondary battery according to any one of claims 1 to 5, which has a BET specific surface area decreasing to 10% or more of a BET specific surface area of the uncrosslinked raw material for negative electrode.

7. The negative-electrode active material for a lithium ion secondary battery according to any one of claims 1 to 6, which has a roundness of 0.85 or higher.

8. The negative-electrode active material for a lithium ion secondary battery according to any one of claims 1 to 7, which has a tap density of 0.1 g/cm$^3$ or higher.

9. A process for producing a negative-electrode active material which comprises attaching a crosslinking agent to a raw material for negative electrode and then reacting the crosslinking agent with a surface functional group of the raw material for negative electrode, wherein the crosslinking agent is selected from the group consisting of multidentate alcohols, multidentate ethers, multidentate carboxylic acids, multidentate esters, and compounds having a structure composed of a combination thereof.

10. A negative electrode for a lithium ion secondary battery, which comprises: a current collector; and an active-material layer formed thereon comprising a negative-electrode active material and a binder, wherein the negative-electrode active material is the negative-electrode active material for a lithium ion secondary battery according to any one of claims 1 to 8.

11. A lithium ion secondary battery comprising: a positive electrode and a negative electrode which are capable of storing/releasing lithium ions; and an electrolyte, wherein the negative electrode is the negative electrode for a lithium ion secondary battery according to claim 10.

**Patentansprüche**

1. Ein aktives Material für eine negative Elektrode für eine Lithiumionen-Sekundärbatterie, welches Lithiumionen speichern/freisetzen kann, **dadurch gekennzeichnet, dass** das aktive Material für eine negative Elektrode durch Umsetzen einer funktionellen Oberflächengruppe auf einem Rohmaterial für eine negative Elektrode mit mindestens einem Vernetzungsmittel, ausgewählt aus der Gruppe bestehend aus mehrzähnigen Alkoholen, mehrzähnigen Ethern, mehrzähnigen Carbonsäuren, mehrzähnigen Estern und Verbindungen mit einer Struktur, zusammengesetzt aus einer Kombination davon, erhalten wird.

2. Das aktive Material für eine negative Elektrode für eine Lithiumionen-Sekundärbatterie gemäß Anspruch 1, wobei das Rohmaterial für eine negative Elektrode eine kohlenstoffhaltige Substanz ist.

3. Das aktive Material für eine negative Elektrode für eine Lithiumionen-Sekundärbatterie gemäß Anspruch 1 oder 2, wobei die funktionelle Oberflächengruppe des Rohmaterials für eine negative Elektrode mindestens eine Art von funktioneller Gruppe, ausgewählt aus der Gruppe bestehend aus einer Hydroxylgruppe, einer Carboxylgruppe, einer Ethergruppe, einer Carbonylgruppe und einer Estergruppe, ist.

4. Das aktive Material für eine negative Elektrode für eine Lithiumionen-Sekundärbatterie gemäß einem der Ansprüche 1 bis 3, wobei das Vernetzungsmittel eine Verbindung mit einer Diesterstruktur ist.

5. Das aktive Material für eine negative Elektrode für eine Lithiumionen-Sekundärbatterie gemäß einem der Ansprüche 1 bis 3, wobei das Vernetzungsmittel ein Sebacinsäurediester oder ein mehrwertiges Alkohol-/Carbonyladdukt ist.

6. Das aktive Material für eine negative Elektrode für eine Lithiumionen-Sekundärbatterie gemäß einem der Ansprüche 1 bis 5, welche einen BETspezifischen Oberflächenbereich aufweist, der auf 10% oder mehr eines BETspezifischen Oberflächenbereichs des unvernetzten Rohmaterials für eine negative Elektrode abnimmt.

7. Das aktive Material für eine negative Elektrode für eine Lithiumionen-Sekundärbatterie gemäß einem der Ansprüche 1 bis 6, welches eine Rundung von 0,85 oder höher aufweist.

8. Das aktive Material für eine negative Elektrode für eine Lithiumionen-Sekundärbatterie gemäß einem der Ansprüche 1 bis 7, welches eine Klopfdichte von 0,1 g/m$^3$ oder mehr aufweist.

9. Ein Verfahren zur Herstellung eines aktiven Materials für eine negative Elektrode, welches Anlagern eines Vernetzungsmittels an ein Rohmaterial für eine negative Elektrode und dann Umsetzen des Vernetzungsmittels mit einer funktionellen Oberflächengruppe des Rohmaterials für eine negative Elektrode umfasst, wobei das Vernetzungsmittel ausgewählt ist aus der Gruppe bestehend aus mehrzähnigen Alkoholen, mehrzähnigen Ethern, mehrzähnigen Carbonsäuren, mehrzähnigen Estern und Verbindungen mit einer Struktur, zusammengesetzt aus einer Kombination davon.

**EP 2 056 380 B1**

10. Eine negative Elektrode für eine Lithiumionen-Sekundärbatterie, welche umfasst: einen Stromabnehmer; und eine darauf gebildete Schicht aus einem aktiven Material, umfassend ein aktives Material für eine negative Elektrode und ein Bindemittel, wobei das aktive Material für eine negative Elektrode das aktive Material für eine negative Elektrode für eine Lithiumionen-Sekundärbatterie gemäß einem der Ansprüche 1 bis 8 ist.

11. Eine Lithiumionen-Sekundärbatterie, umfassend: eine positive Elektrode und eine negative Elektrode, welche Lithiumionen speichern/freisetzen können; und einen Elektrolyt, wobei die negative Elektrode die negative Elektrode für eine Lithiumionen-Sekundärbatterie gemäß Anspruch 10 ist.

**Revendications**

1. Matière active d'électrode négative pour un accumulateur secondaire aux ions lithium, laquelle est capable de stocker/libérer des ions lithium, **caractérisée en ce que** la matière active d'électrode négative est obtenue par réaction d'un groupe fonctionnel de surface d'une matière première pour électrode négative avec au moins un agent de réticulation choisi dans le groupe constitué d'alcools multidentés, d'éthers multidentés, d'acides carboxyliques multidentés, d'esters multidentés et de composés ayant une structure constituée d'une combinaison de ceux-ci.

2. Matière active d'électrode négative pour un accumulateur secondaire aux ions lithium selon la revendication 1, dans laquelle la matière première pour électrode négative est une substance carbonée.

3. Matière active d'électrode négative pour un accumulateur secondaire aux ions lithium selon la revendication 1 ou 2, dans laquelle le groupe fonctionnel de surface de la matière première pour électrode négative est au moins un type de groupes fonctionnels choisis dans le groupe constitué d'un groupe hydroxyle, d'un groupe carboxyle, d'un groupe éther, d'un groupe carbonyle, et d'un groupe ester.

4. Matière active d'électrode négative pour un accumulateur secondaire aux ions lithium selon l'une quelconque des revendications 1 à 3, dans laquelle l'agent de réticulation est un composé ayant une structure diester.

5. Matière active d'électrode négative pour un accumulateur secondaire aux ions lithium selon l'une quelconque des revendications 1 à 3, dans laquelle l'agent de réticulation est un diester d'acide sébacique ou un produit d'addition d'alcool polyvalent/carbonyle.

6. Matière active d'électrode négative pour un accumulateur secondaire aux ions lithium selon l'une quelconque des revendications 1 à 5, laquelle présente une surface spécifique BET diminuant jusqu'à 10 % ou plus d'une surface spécifique BET de la matière première non réticulée pour électrode négative.

7. Matière active d'électrode négative pour un accumulateur secondaire aux ions lithium selon l'une quelconque des revendications 1 à 6, laquelle présente une rondeur de 0,85 ou supérieure.

8. Matière active d'électrode négative pour un accumulateur secondaire aux ions lithium selon l'une quelconque des revendications 1 à 7, laquelle présente une masse volumique après tassement de 0,1 g/cm$^3$ ou supérieure.

9. Procédé de production d'une matière active d'électrode négative qui comprend la fixation d'un agent de réticulation à une matière première pour électrode négative et la réaction subséquente de l'agent de réticulation avec un groupe fonctionnel de surface de la matière première pour électrode négative, dans lequel l'agent de réticulation est choisi dans le groupe constitué d'alcools multidentés, d'éthers multidentés, d'acides carboxyliques multidentés, d'esters multidentés, et de composés ayant une structure constituée d'une combinaison de ceux-ci.

10. Electrode négative pour un accumulateur secondaire aux ions lithium, laquelle comprend : un collecteur de courant ; et une couche de matière active formée sur son dessus comprenant une matière active d'électrode négative et un liant, dans laquelle la matière active d'électrode négative est la matière active d'électrode négative pour un accumulateur secondaire aux ions lithiums selon l'une quelconque des revendications 1 à 8.

11. Accumulateur secondaire aux ions lithium comprenant : une électrode positive et une électrode négative qui sont capables de stocker/libérer des ions lithium ; et un électrolyte, dans lequel l'électrode négative est l'électrode négative pour un accumulateur secondaire aux ions lithium selon la revendication 10.

**EP 2 056 380 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000100441 A
- JP 2005011594 A
- JP 2002514245 A
- JP 9161848 A
- JP 1152165 A
- WO 2006008930 A1